# FASCICULE DE BREVET EUROPEEN

(11) **EP 2 947 283 B1**
(45) Date de publication et mention de la délivrance du brevet: **11.01.2017**
(21) Numéro de dépôt: 14305776.8
(22) Date de dépôt: 23.05.2014
(51) Int. Cl.: F01D 25/30, F16L 59/12

(54) **Structure d'isolation thermo-acoustique pour échappement de machine tournante**
Thermoakustische Dämmstruktur für die Abgasanlage einer sich drehenden Maschine
Thermal-acoustic insulation structure for the exhaust of a rotating machine

(43) Date de publication de la demande: 25.11.2015
(73) Titulaire: GE Energy Products France SNC, 90000 Belfort (FR)
(72) Inventeur: Bracquemart, Eric, 90000 Belfort (FR); Baranzize, Didier, 90000 Belfort (FR)
(74) Mandataire: Casalonga

(56) Documents cités:
- EP-A1- 1 655 722
- FR-A1- 2 146 362
- JP-A- 2010 121 496
- US-A1- 2014 003 931
- US-B2- 8 613 589

## Description

La présente invention a pour objet une structure de protection thermo acoustique pour des sections ou interfaces de conduite de gaz d'échappement de machine tournante ou de chaudière échappement de machine.

Une section de conduite de gaz d'échappement est constituée d'une structure isolée thermo-acoustique et peut comprendre intérieurement un diffuseur permettant un flux homogène de gaz chauds provenant des derniers étages de turbine à gaz ou d'une chaudière.

Le document EP1359308 montre une machine tournante avec une section de conduite de gaz d'échappements munie d'un séparateur ou diffuseur permettant d'homogénéiser le flux de gaz chaud sortant de la machine vers un système de récupération de type chaudière. Le système peut également comporter un mécanisme permettant de dévier les gaz chauds vers l'atmosphère en passant par une série de silencieux.

Les documents US5603604, US2009308075, FR2697287, FR2934009, FR2924745, US2013129498 présentent d'autres variantes pour diffuseur de section d'échappement de machine tournante.

La structure de section d'échappement peut avoir une section transversale carré ou circulaire, voire une extrémité circulaire et une autre carrée avec une longueur conique croissante à partir de la sortie de la turbine tel que montré dans WO2010010277, US2004107690, US6035964, US2003136101, US2011088398.

La section d'échappement est souvent découplée de la machine tournante elle-même, par exemple à l'aide d'un joint d'expansion tel que montré dans le document US2003136101. Ceci permet à la structure de suivre de cycles d'expansion et contraction sans imposer de contraintes à la machine tournante.

La structure d'isolation de la section d'échappement peut être fabriquée à partir d'une tôle interne en acier inoxydable, et d'une tôle externe en acier avec une ou plusieurs couches de matériau isolant intermédiaire maintenu en position entre les deux tôles tel que montré dans les documents US2014003931, EP1655722, EP0791726.

La couche d'isolation intermédiaire réduit l'expansion et la contraction de la tôle externe, en plus de protéger celle-ci de la température de gaz d'échappement atteignant plus de 600°C. La matière et l'épaisseur des couches intermédiaire sont choisies afin d'atteindre un certain coefficient de transfert thermique. Par exemple, elles peuvent être formées de fibres minérales, fibres de verre, fibres bio-solubles ou laine de roche, lesquelles peuvent être installées par nappes ou sous la forme de cousins remplis d'isolant afin d'éviter qu'elles se désagrègent dans le temps et faciliter la manipulation lors de l'installation manuelle.

Les couches de matériaux isolants sont installées de préférence entre des plaques ou séparateurs fixés ou soudés sur la surface interne de la tôle externe, tel que montré dans les documents US2004107690, US7549507.

Ainsi la structure d'isolation d'échappement doit pouvoir supporter les différences de température à l'intérieur de la structure, lesquelles doivent être absorbées par les éléments de fixation prévus dans la structure.

Elles doivent éviter autant que possible la déformation de la tôle interne due aux contraintes thermiques afin d'assurer la continuité des écoulements à l'intérieur de la section.

Elles doivent enfin minimiser les ponts thermiques entre la tôle interne et la tôle externe.

Une solution classique pour former la structure de section d'échappement consiste à utiliser plusieurs tôles métalliques reliées entre elles par des barres fixées sur des supports. Entre les deux tôles, les barres et les supports est placé une ou plusieurs couches de matériau isolant. Les supports ont une forme de plaque avec des bords coupés en forme de V formant des pieds de fixation soudés à la surface interne (côté isolation) de la tôle externe. Les barres sont soudées aux plaques de préférence entre les découpes en V.

Lors du montage par boulonnage, l'extrémité filetée d'une vis fait saillie à partir de la tôle interne et vient en appui contre le bord non découpé des plaques. Des écrous et/ou rondelles métalliques maintiennent la tôle fixée en appui contre les plaques support.

La tôle interne se trouve ainsi en contact d'un côté avec les gaz d'échappement et d'un autre avec les bords plats non coupés des plaques support.

Ainsi, après assemblage des tôles, les barres peuvent dépasser des tôles internes et se trouver directement dans le flux de gaz chauds, tel que montré dans les documents US2004107690, US5669812. Les barres, lorsqu'elles sont fixées aux plaques support peuvent créer des ponts thermiques et créer des points chauds sur la tôle externe. En effet, les bords plats des plaques support se trouvent en contact direct avec la tôle interne, laquelle peut atteindre les 500°C. De plus, la couche de matériau isolant peut ainsi créer des gradients de température importants dans chaque plaque, provoquant sa déformation voire sa torsion car elle est contrainte en dilatation au niveau des pieds de fixation des plaques à la surface interne de la tôle extérieure. Ceci peut créer dans la structure d'échappement des contraintes voire une déformation de celle-ci.

Une autre solution telle que présentée dans le document US2014003931 propose d'utiliser deux supports en forme de « C » entre lesquels est logé un élément de liaison de deux tôles en forme de T, muni de trous oblongs afin de limiter le transfert thermique. L'élément en forme de T peut se dilater de manière latérale entre les deux supports en forme de « C » tout en assurant la liaison entre les tôles interne et externe.

La présente invention vise à remédier à ces inconvenants.

Elle propose en particulier une structure d'isolation thermo-acoustique pour section d'échappement de gaz chauds permettant de réduire les ponts thermiques, ainsi que les points chauds dans la tôle externe. En outre l'invention doit permettre de minimiser la déformation et les contraintes de la structure.

L'invention a ainsi pour objet une structure d'isolation thermo-acoustique pour section d'échappement de machines tournantes.

La structure d'isolation thermo-acoustique pour échappement de machine tournante, comprend au moins une tôle interne en contact avec les gaz d'échappement et au moins une tôle externe, parallèles entre elles, et entre lesquelles est disposée au moins une couche de matériau thermiquement isolant, lesdites tôles étant reliées entre elles à l'aide d'au moins une barre et d'au moins un élément de support fixé sur la tôle externe. En outre, après montage de la structure, la tôle interne est fixée à une extrémité de la barre, tandis que l'autre extrémité est fixée à l'élément support avec au moins un moyen de fixation amovible muni d'un premier moyen d'isolation thermique afin d'éviter le contact entre ladite barre et l'élément support et la tôle externe.

Entre la barre et la surface interne (côté isolation) de la tôle externe est placé un deuxième moyen d'isolation thermique.

Ainsi, les deux tôles de la structure sont reliées à travers au moins une barre fixée à un élément support. Une première extrémité de barre est fixée à un élément de support par des moyens de fixation amovible et des moyens d'isolation thermique afin d'éviter le contact entre la barre et l'élément support dans la zone de fixation, la tôle interne étant fixée à la deuxième extrémité de la barre à une distance de la tôle externe correspondant au maximum à 90% de l'épaisseur de la couche d'isolation thermo-acoustique afin d'assurer une compression de celle-ci entre les deux tôles. Le ou les matériaux thermo-acoustiques intermédiaires peuvent comprendre de la mélamine, de la laine de roche, de la fibre biosoluble ou de la fibre de verre.

Les barres aussi appelés picots peuvent être filetées sur toute leur longueur ou uniquement aux extrémités. Tandis que les moyens de fixation peuvent être par exemple des boulons, des écrous mais aussi des plaques carrées ou rondelles soudées aux tôles et aux barres.

L'utilisation de boulons ou écrous a comme avantage la possibilité de pouvoir régler un support fixé sur l'extrémité de la barre à une distance souhaitée entre la tôle interne et la tôle externe avant le serrage de la tôle interne contre le support. Toutefois en raison de vibrations de la structure au passage de gaz chauds lors du fonctionnement de la turbine, il est nécessaire d'utiliser des moyens pour éviter le desserrage des boulons ou écrous. Ainsi, il est nécessaire de les bloquer par un point de soudure ou par d'autres moyens d'anti-rotation tels que des plaques anti-rotation. L'utilisation de plaques ou de rondelles soudées aux barres permet de réaliser le positionnement et la fixation de la tôle interne par rapport à la tôle externe en une seule opération.

Afin de faciliter le montage des tôles et de l'isolation intermédiaire de la structure, des éléments support sont fixés selon plusieurs arrangements, par exemple par soudage, sur la surface interne (côté couche d'isolation) de la tôle externe. Les barres sont ensuite positionnées dans des trous prévus dans l'élément support et une partie des moyens de fixation permet de positionner la barre à une distance de la surface interne de la tôle externe, cette distance dépendant de la dilatation thermique des barres et de l'élément support. La barre est ensuite fixée à un élément support par les moyens de fixation chacun munis des éléments d'isolation thermique, tel que des rondelles en céramique ou en téflon, ces derniers peuvent avoir aussi une forme en collerette.

Cependant il est possible d'ajouter une couche d'isolant thermique entre la barre et la surface interne de la tôle externe et cela afin d'éviter le contact entre les deux.

Enfin la tôle interne est positionnée à l'autre extrémité de la barre tout en gardant une distance souhaitée entre la tôle interne et la tôle externe. Pour cela, la tôle interne est appuyée sur un support fixé à la barre. De préférence la distance entre les tôles peut être comprise entre 80 et 90% de l'épaisseur de la ou des couches d'isolation et cela afin de la maintenir comprimée entre les deux tôles, ceci évitant son déplacement par des vibrations lors du fonctionnement.

D'autres caractéristiques et avantages de la présente invention apparaitront plus clairement à la lecture de la description suivante donnée à titre d'exemple illustratif et non limitatif et faite de référence aux dessins annexés sur lequel :
- la figure 1 est une coupe d'un arrangement de barres selon l'état de l'art sans plaque de support ;
- la figure 2 est une vue de côté de plaques de soutien pour les barres selon l'état de l'art ;
- la figure 3 est une vue de côté de la barre montée sur l'élément support selon la structure de l'invention dans un premier mode de réalisation ;
- la figure 4 est une vue de côté de la barre montée sur un élément support selon la structure de l'invention dans un deuxième mode de réalisation ; et
- la figure 5 est une vue en coupe transversale suivant la ligne V-V de la figure 4 avec plusieurs barres selon l'invention.

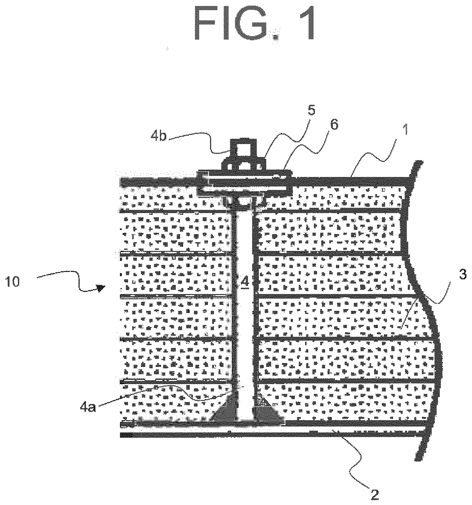

La figure 1 illustre une structure d'isolation 10 pour échappement de machines tournante selon l'état de l'art, comprenant une tôle interne 1 et une tôle externe 2 et entre les deux une couche d'isolation 3 et des barres 4 avec une première extrémité 4b soudée perpendiculaire à la surface interne (côté isolation) de la tôle externe 2. Une deuxième extrémité filetée 4a de la barre prolongeant à travers la tôle interne par des trous prévus dans celle-ci où elle est maintenue fixée autour de la zone du trou par des boulons 5 et rondelles 6.

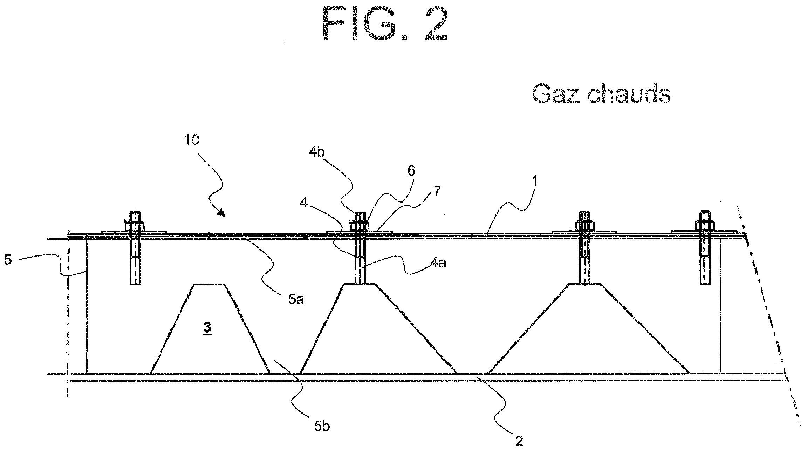

La figure 2 illustre une structure d'isolation 10 avec deux tôles 1, 2 et entre les deux une couche d'isolation 3 et des barres 4 montées dans des plaques support 5 selon l'état de l'art. Les plaques 5 de support ont chacune un bord plat 5a en contact avec la tôle interne 1 et un autre bord avec plusieurs découpes en forme de V formant des pieds 5b. Les pieds sont soudés à la surface interne (côte isolation) de la tôle externe 2. Les barres 5 sont soudées aux plaques au-dessus des découpes en V de manière à ce que l'extrémité filetée 4b s'étende dans les trous prévus dans la tôle interne 1 où des écrous 6 et rondelles métalliques 7 maintiennent la couche d'isolation intermédiaire 3 comprimée entre les tôles 1,2. La tôle interne 1 se trouve ainsi en contact d'un côté avec les gaz chauds et d'un autre avec les bords plats de plaques 5a. De plus, puisque l'extrémité filetée 4b des barres 4 se trouve dans le flux de gaz chaud, il y a d'abord une transmission de chaleur par contact entre les gaz chauds et les extrémités de barres puis un transfert de thermique par conduction entre les barres et les plaques auxquelles elles sont soudées ainsi qu'entre la tôle interne et les bords plats de plaques.

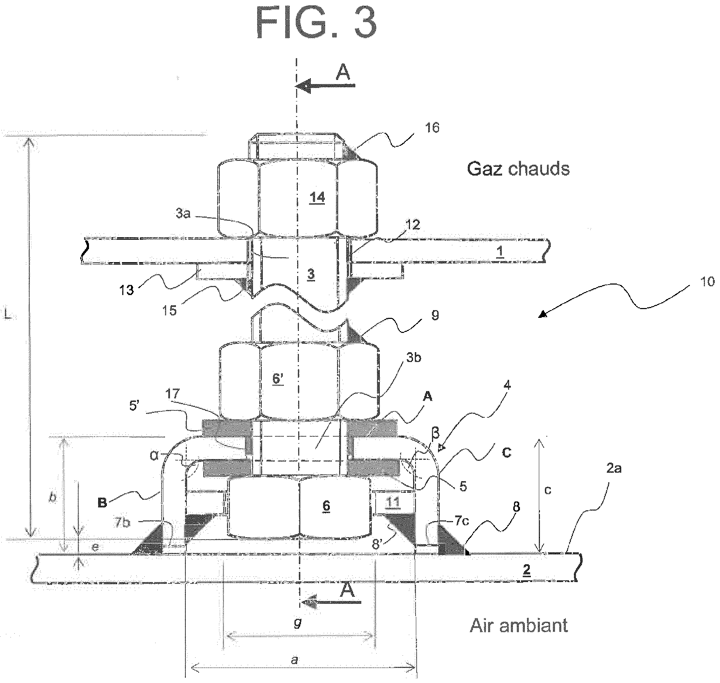

On se réfèrera maintenant à ma figure 3 qui illustre un premier mode de réalisation d'une structure thermo-acoustique pour échappement de machine tournante selon l'invention 10. Sur cette figure, des éléments identiques à ceux de la figure 1 portent les mêmes références.

Cette structure comprend au moins une tôle interne 1 placée du côté des gaz chauds et une tôle externe 2 placée du côté de l'air ambiant, une couche ou matelas isolant intermédiaire placée entre les deux tôles (non représentée) et au moins une barre filetée 3 fixée de manière régulière le long d'un élément de support 4. En effet, sur chaque tôle externe (côté isolation) il peut y avoir un arrangement de plusieurs éléments de support 4, par exemple un arrangement linéaire dans le sens de l'écoulement des gaz d'échappement, chaque élément support 4 ayant plusieurs barres 3 positionnées à distance régulière dans le sens de la longueur de la structure. Bien entendu il est également possible de placer une seule barre 3 sur un élément de support 4.

L'élément de support 4 peut avoir une forme en U inversé une fois fixé sur la tôle externe 2. En effet l'élément de support 4 comprend trois faces A, B, C et peut être obtenu par soudage de trois faces distinctes ou par pliage d'une pièce unique. Toutefois une combinaison de soudage et/ou pliage peut être utilisé, par exemple par soudage de deux pièces pliées assemblées par un cordon de soudure tout le long de la face A de l'élément 4.

Les faces B et C peuvent être égales en section et surface, disposées de préférence parallèles entre elles, et toute les deux perpendiculaires à la face A. Ainsi la section transversale du support 4 peut former deux angles α et β entre les faces B-A et A-C respectivement.

Sur la face A de l'élément de support 4 sont usinés au moins un trou 17 de préférence au centre de la distance a et à distance régulière dans sa longueur du support 4. Le diamètre du trou 17 est légèrement supérieur à celui de barres 3. Le diamètre barres 3 peut compris entre 10 et 14 mm de préférence 12mm.

Dans la figure 3 sont représentés également les distances a, b, c caractérisant la section transversale des faces A, B et C de l'élément support 4. La distance a peut être de préférence comprise entre le diamètre externe de la rondelle 5, 5' ou son diamètre plus 20mm, afin d'obtenir un support 4 le plus économique possible tout en tenant compte des contraintes de pliage ou de soudure de faces A, B, C.

Les distances b et c peuvent être de préférence plus grandes ou égales à la somme de l'épaisseur de la rondelle 5 plus l'épaisseur de l'écrou ou tête de vis 6 plus une distance e. La distance e est prévue pour maintenir une séparation entre l'extrémité de la barre 3 et la surface interne de la tôle externe 2a même en cas de dilatation thermique de la structure 10. La distance e peut dépendre des matériaux utilisés mais elle peut être de préférence comprise entre 3 et 15mm. Pour améliorer les performances thermiques, une couche d'isolant peut être insérée entre l'écrou ou la tête de vis 6 et la tôle extérieur 2.

L'élément de support 4 peut comprendre de préférence dans les bords libres des faces B et C des usinages ou des découpes 7b, 7c formant des encoches demi-rectangulaires ou demi-cercles à distance régulière dans la longueur de l'élément support 4 et se prolongeant jusqu'à la moitié des distances b ou c. L'élément de support 4 peut être de préférence fixé sur la surface interne 2a de la tôle extérieure 2 par des soudures 8 prévues dans les bords non découpés des faces B et C.

La couche d'isolation intermédiaire (non représentée) est placée autour desdits barres 3 et entre l'élément support 4.

Les barres 3 peuvent avoir deux extrémités filetées 3a, 3b ou avoir un filetage sur toute leur longueur L. Une première extrémité de la barre 3a est positionnée à travers le trou 17 prévu sur la face A du support 4 et positionné par un premier écrou 6' afin de garder une distance e entre la surface interne 2a de la tôle extérieur 2 et ladite première extrémité de la barre 3b munie d'un deuxième écrous ou tête de vis 6. La distance e permet de compenser la dilatation des barres 3 et de la tôle interne et d'améliorer les performances thermiques. Elle est préférence comprise entre 3 et 15 mm.

Chaque écrou 6, 6' est serré contre des rondelles isolantes respectives 5, 5' disposées entre l'écrou et les bords de trous 6 dans l'élément de support 4. Les rondelles sont choisies en matériau de faible coefficient de transfert thermique par exemple en céramique, composite renforcé de fibres de verre, ou Polytetrafluoroethylene (PTFE). Ainsi au serrage des écrous 6, 6', les deux rondelles 5, 5' évitent le contact direct entre les dits écrous et l'élément de support 4 dans la zone autour du trou 17 sur la face A. L'une des rondelles 5, 5' de préférence la rondelle 5' peut être de type collerette tandis que l'autre peut être de type plate.

Ledit premier écrou 6' peut être fixé en rotation par un point de soudure 9 tandis que ledit deuxième écrou aussi appelé tête de vis 6 peut être fixé en rotation par une tôle anti rotation 11 soudée par une soudure 8' de part et d'autre des faces internes B et C à hauteur du dit deuxième écrou 6, de manière à bloquer sa rotation. L'élément anti rotation 11 peut par exemple être muni d'un trou oblong, rectangulaire ou hexagonal ou toute autre forme avec un passage de largeur g qui est sensiblement égale à la largeur de l'écrou ou tête de vis 6. Cela permet de bloquer l'écrou et/ou la barre en rotation.

La deuxième extrémité 3a de la barre 3 traverse le trou 12 prévu dans tôle interne 1. De préférence, le diamètre du trou 12 est supérieur à celui de la barre 3 afin de permettre la dilatation de la tôle 1. Il est de préférence compris entre 5 et 50mm. Une plaque de support 13 est soudée par une soudure 15 sur la barre 3 à une distance de la tôle extérieure 2 comprise entre 80 et 100% de préférence 90% de l'épaisseur de la couche d'isolation (non représentée).

La tôle interne 1 est ainsi positionnée en appui sur la plaque support 13. Un écrou 14 bloque le déplacement axial de la tôle interne 1 le long de la barre 3. L'écrou 14 peut être bloqué en rotation de préférence par un point de soudure 16. La dite deuxième extrémité 3a de la barres 3 se trouve ainsi, après montage, directement dans le flux de gaz d'échappement.

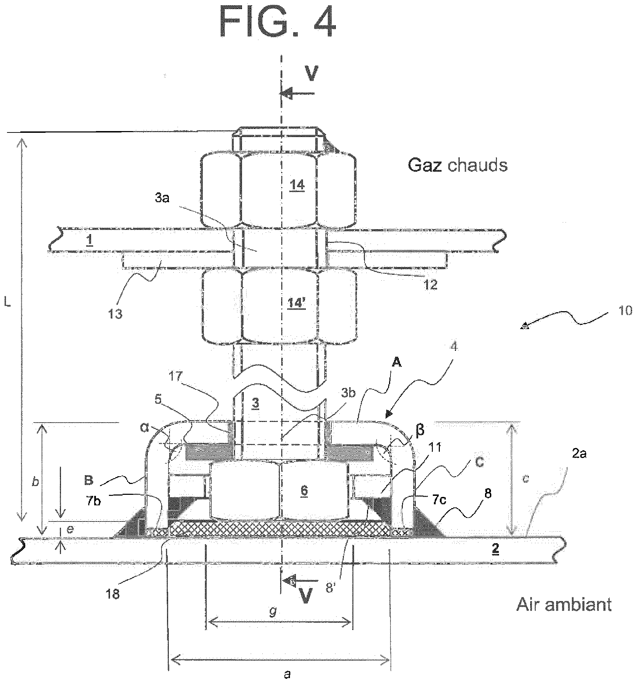

Un deuxième mode de réalisation est illustré dans la figure 4 sur laquelle des éléments identiques à ceux de la figure 3 sont désignés par les mêmes références.

La première extrémité 3b de la barre 3 est positionnée à travers le trou 17 prévu dans la face A du support 4 et positionnée en appui contre une couche d'un matériau isolant 18 s'étalant sur toute la distance a et sur le diamètre de l'écrou 6. Le matériau isolant 18 peut être de préférence réalisé à partir de fibres céramiques, de fibres minérales ou fibres de roche. La fixation de la première extrémité de la barre 3b dans la zone du trou 17 prévu sur la face A de l'élément support 4 est faite par serrage de l'écrou ou tête de vis 6 contre la rondelle 5, de préférence une rondelle à collerette. L'épaisseur du matériau 18 permet de garder une distance minimale e entre la surface interne 2a et la tôle extérieure 2. La distance e permet de compenser la dilatation de la barre 3 et de la tôle interne. Elle est de préférence comprise entre 3 et 15mm. En effet, lors de la dilatation de la barre 3, le matériau isolant 18 est comprimé tout en évitant le contact entre celui-ci et la surface interne 2a et la tôle extérieure 2.

L'écrou ou une tête de vis 6 de la première extrémité de la barre 3b est bloqué en rotation par une plaque anti rotation 11 munie d'un trou oblong, rectangulaire ou hexagonal ou toute autre forme avec un passage de largeur g qui est sensiblement égale à la larguer de l'écrou ou tête de vis 6. Cela permet de bloquer l'écrou et/ou la barre en rotation. La plaque anti rotation est soudée de préférence par soudure 8' de part et d'autre des faces internes B et C à hauteur du dit écrou 6.

La deuxième extrémité 3a de la barre 3 traverse le trou 12 prévu dans la tôle interne 1. De préférence le diamètre du trou 12 est supérieur à celui de la barre 3 afin de permettre la dilatation de la tôle 1, de préférence comprise entre 5 et 50 mm.

Un écrou 14' est positionné dans la barre 3 à une distance de la tôle extérieure 2 comprise entre 80 et 100% de préférence 90 % de l'épaisseur de la couche d'isolation (non représentée). Une plaque 13 positionnée dans la barre 3 sert d'appui à la tôle 1. L'écrou 14 sur la deuxième extrémité 3a bloque le déplacement axial de la tôle interne 1 sur la barre 3.

L'élément support 4 peut comprendre également de préférence dans les bords libres des faces B et C des encoches 7b, 7c formant des demi-rectangles ou demi-cercles à distance régulière dans la longueur de l'élément support 4 et se prolongeant jusqu'à la moitié des distances b et c. L'élément de support 4 peut être fixé à la surface interne 2a de la tôle externe 2 par des soudures 8 prévues sur les bords entre les encoches 7b, 7c des faces B et C.

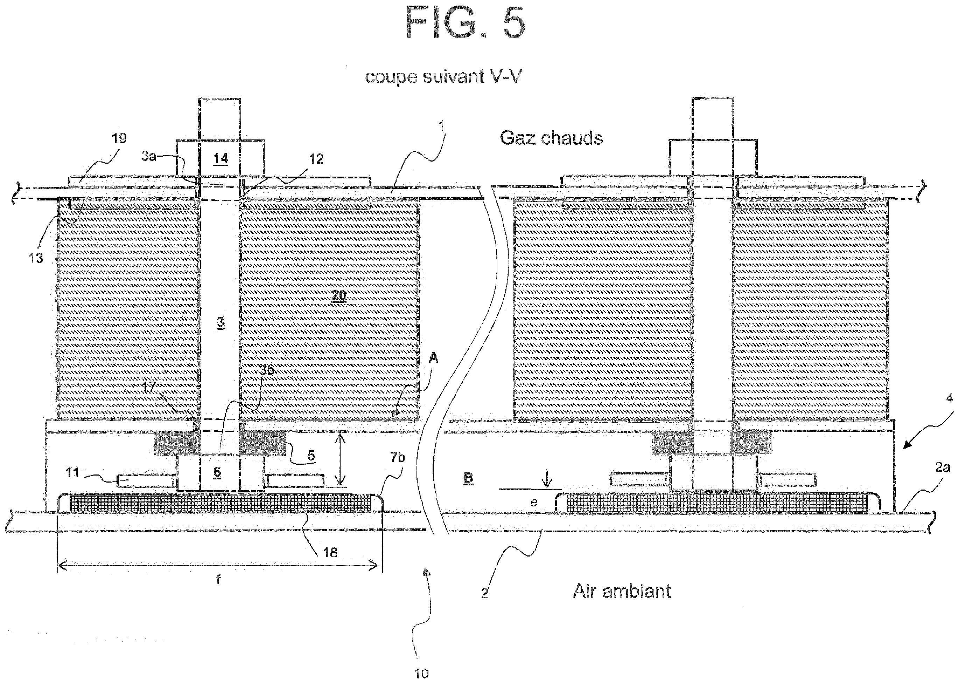

La figure 5 illustre une vue selon la section V-V (selon la figure 4) par rapport à la barre 3. Dans la figure est représenté un agencement d'au moins deux barres 3, 3' fixées le long de l'élément de support 4. Ceci peut être le cas pour le support des figures 3 et 4. Le positionnement des barres 3, 3' et fait au milieu de la distance f des découpes 7b, 7c. La distance f est au moins trois fois le diamètre de l'écrou ou tête de vis 6.

L'arrangement des fixations est le même que pour la tôle extérieure 2 sur la première extrémité 3b de la figure 4.

La deuxième extrémité de la barre 3a traverse le trou 12 prévu dans la tôle interne 1 de préférence de diamètre est supérieur aux barres 3. Le diamètre du trou 12 doit être calculé pour permettre la dilatation de la tôle 1. Ainsi le diamètre du trou 12 est de préférence compris entre 5 et 50mm. La tôle interne 1 est ainsi positionnée en appui sur une plaque support 13 soudée (non représentée) à la barre 3 afin de garder une distance entre la tôle interne 1 et la tôle externe 2 comprise entre 80 et 100% de préférence 90% de l'épaisseur de la couche d'isolant 20. Un écrou 14 positionné sur la deuxième extrémité de la barre 3a de la barre 3 est serré contre une plaque de serrage ou rondelle 19 afin de bloquer le déplacement axial de la tôle interne 1 le long de la barre 3.

Le dit écrou 14 peut être bloqué en rotation par un point de soudure (non représenté) prévu entre le dit écrou 14 et la deuxième extrémité 3a de la barre 3.

Bien entendu les trois variantes proposées dans les figures 3 à 5 pour l'appui et la fixation de la tôle interne 1 sur la deuxième extrémité 3b de la barre 3, peuvent être combinées aux deux variantes de fixation de la première extrémité 3a de la barre 3 à l'élément support 4 présentés dans les figures 3 à 4, tout en restant dans le cadre de l'invention.

Selon une autre variante de l'invention, les faces B et C de l'élément de support 4 peuvent être non parallèles entres elles et non perpendiculaires par rapport à la face A. Ainsi les angles α et β peuvent être différents et compris de préférence entre 45° et 135°.

Selon encore une autre variante de l'invention, le matériau isolant 18 peut être aussi prévu dans le mode de réalisation de la figure 3 comme un deuxième isolant en plus de premières rondelles isolantes 5, 5' ou, lorsque après assemblage la distance e disponible entre la barre 3 et la surface interne 2a de la tôle extérieure (2) n'est pas suffisante en raison de la hauteur b et c, par exemple lorsque les angles α et β sont supérieurs à 90°.

Dans encore une autre variante plus économique de l'invention, l'élément support 15 peut être un grillage métallique pliée pour former les faces A, B, C avec des ouvertures sur la face A assurant le support des barres 3 avec des écrous et/ou rondelles.

Ainsi, dans tous les modes de réalisation ci-dessus, ladite deuxième extrémité 3a de la barre 3 se trouve dans le flux de gaz d'échappement à l'intérieur de la section du diffuseur. La fixation des barres 3 dans les trous 17 de l'élément support 4 évite le contact direct des barres 3 et des écrous 6,6' avec le support 4 dans la zone de trous 17. De même, il est possible d'éviter également le contact entre la première extrémité 3b de la barre 3 et/ou les écrous 6 avec la surface interne 2a de la tôle externe 2. Ainsi, il est possible d'éviter les ponts thermiques vers la tôle externe 2 et éviter la déformation de la structure.

La structure d'isolation pour gaz d'échappement selon toutes les variantes de l'invention permet de minimiser les ponts thermiques vers la tôle externe 2 tout en assurant la tenue de la couche d'isolation malgré la vibration de la structure.

Le montage de tôles pour la structure d'isolation d'échappement peut comporter les étapes successives suivantes :
- Mise en place de la première rondelle isolante 5 sur les barres 3 ;
- Mise en place d'un moyen d'isolation thermique sur les barres 3 ;
- Mise en place des barres 3 au travers des trous 17 de l'élément support 4;
- Fixation par soudage du support 4 sur la surface intérieure 2a de la tôle externe 2 ;
- Mise en place des moyens de fixation amovible 6 sur les barres 3 ;
- Mise en place du moyen anti rotation 11 à l'intérieur de l'élément support 4 ;
- En option, mise en place d'un seconde moyen d'isolation thermique 5' sur les barres 3 ;
- En option, mise en place et pointage des moyens de fixation amovible 6' sur les barres 3 ;
- En option, mise en place du deuxième moyen d'isolation thermique 18 à travers les découpes 7b, 7c de l'élément support 4 ;
- Mise en place d'au moins une couche de matériau d'isolant intermédiaire 20 ;
- Mise en place du support 13 sur la barre 3 par soudage ou par moyen de fixation 14' ;
- Soudure par point de moyens de fixation 14' ou du support 13 ;
- Installation des tôles internes 1 en appui sur le support 13 ;
- Mise en place des moyens de fixation 14 et soudure par point du moyen de fixation 14 à la barre 3.

## Revendications

1. Structure d'isolation thermo-acoustique (10) pour échappement de machine tournante, **caractérisé en ce qu'**elle comprend au moins une tôle interne (1) en contact avec les gaz d'échappement et au moins une tôle externe (2), parallèles entre elles, et entre lesquelles est disposé au moins une couche de matériau isolant thermique (20), les dits deux tôles (1,2) étant reliés entre elles à l'aide d'au moins une barre (3) et au moins un élément de support (4) fixé sur la tôle externe (2), et **en ce qu'**après montage de la structure, la tôle interne (1) est fixée à une extrémité (3a) de la barre (3), tandis que l'autre extrémité (3b) est fixée à l'élément de support (4) avec au moins un moyen de fixation amovible (6,6') muni d'un premier moyen d'isolation thermique (5, 5') afin d'éviter le contact entre ladite barre (3) et l'élément support (4) et la tôle externe (2).

2. Structure d'isolation (10) selon la revendication 1, **caractérisée en ce qu'**entre l'extrémité (3b) de la barre (3) et la surface interne (2a) de la tôle externe (2) est placé un deuxième moyen d'isolation thermique (18).

3. Structure d'isolation (10) selon les revendications 2, **caractérisée en ce que** le deuxième moyen d'isolation thermique (18) est un matériau isolant de type fibres céramiques, minérales ou fibre de roche.

4. Structure d'isolation (10) selon la revendication 1 ou 3, **caractérisée en ce que** chaque premier moyen d'isolation (5,5') est disposé entre chaque moyen de fixation amovible (6, 6') et le trou (17) de l'élément de support (4).

5. Structure d'isolation (10) selon la revendication 1 et 4, **caractérisée en ce qu'**au moins l'un des premiers moyens d'isolation (5, 5') est une rondelle à collerette.

6. Structure d'isolation (10) selon la revendication 1 et 4, **caractérisée en ce que** le premier moyen d'isolation thermique (5, 5') est une rondelle céramique.

7. Structure d'isolation (10) selon la revendication 1 et 4, **caractérisée en ce que** le premier moyen d'isolation thermique (5, 5') est une rondelle en téflon.

8. Structure d'isolation (10) selon la revendication 1 et 4, **caractérisée en ce que** le premier moyen d'isolation thermique (5, 5') est une rondelle en composite renforcé de fibres de verre.

9. Structure d'isolation (10) selon la revendication 1 ou 3, **caractérisée en ce que** la tôle interne (1) est tenue entre un moyen de fixation amovible (14) et un support (13) fixé à l'extrémité (3a).

10. Structure d'isolation (10) selon l'une quelconque des revendications 1 à 9, **caractérisée en ce que** le support (13) est une tôle ou une rondelle.

11. Structure d'isolation (10) selon les revendications 9 et 10, **caractérisée en ce que** le support (13) est fixé à l'extrémité (3a) par soudage (15) ou écrou (14').

12. Structure d'isolation (10) selon les revendications 9 et 11, **caractérisée en ce que** la tôle interne (1) est fixée au support (13) par une fixation amovible (14) et/ou une rondelle (19).

13. Structure d'isolation (10) selon l'une quelconque des revendications précédentes, **caractérisée en ce que** les moyens de fixation amovibles (6,6') sont de boulons ou des écrous.

14. Structure d'isolation (10) selon l'une quelconque des revendications précédentes **caractérisée en ce que** sur la surface interne (2a) de la tôle externe (2) sont rangés et fixés plusieurs éléments de support (4)

## Patentansprüche

1. Thermoakustische Dämmstruktur (10) für die Abgasanlage einer sich drehenden Maschine, **dadurch gekennzeichnet, dass** sie wenigstens ein inneres Blech (1), das sich mit den Abgasen in Kontakt befindet, und wenigstens ein äußeres Blech (2) umfasst, die zueinander parallel sind und zwischen denen wenigstens eine Schicht eines wärmeisolierenden Materials (20) angeordnet ist, wobei die zwei Bleche (1, 2) mithilfe wenigstens einer Stange (3) und wenigstens eines Stützelements (4), das an dem äußeren Blech (2) befestigt ist, miteinander verbunden sind, und dadurch, dass nach der Montage der Struktur das innere Blech (1) an einem Ende (3a) der Stange (3) befestigt ist, während das andere Ende (3b) an dem Stützelement (4) mit wenigstens einem lösbaren Befestigungsmittel (6, 6`) befestigt ist, das mit einem ersten Wärmeisolationsmittel (5, 5') ausgestattet ist, um den Kontakt zwischen der Stange (3) und dem Stützelement (4) und dem äußeren Blech (2) zu vermeiden.

2. Dämmstruktur (10) nach Anspruch 1, **dadurch gekennzeichnet, dass** zwischen dem Ende (3b) der Stange (3) und der Innenfläche (2a) des äußeren Blechs (2) ein zweites Wärmeisolationsmittel (18) angeordnet ist.

3. Dämmstruktur (10) nach den Ansprüchen 2, **dadurch gekennzeichnet, dass** das zweite Wärmeisolationsmittel (18) ein isolierendes Material vom Typ von Keramikfasern, Mineralfasern oder Steinfasern ist.

4. Dämmstruktur (10) nach Anspruch 1 oder 3, **dadurch gekennzeichnet, dass** jedes erste Isolationsmittel (5, 5`) zwischen einem jeweiligen lösbaren Befestigungsmittel (6, 6`) und dem Loch (17) des Stützelements (4) angeordnet ist.

5. Dämmstruktur (10) nach Anspruch 1 und 4, **dadurch gekennzeichnet, dass** wenigstens eines der ersten Isolationsmittel (5, 5`) eine Tellerscheibe ist.

6. Dämmstruktur (10) nach Anspruch 1 und 4, **dadurch gekennzeichnet, dass** das erste Wärmeisolationsmittel (5, 5') eine Keramikscheibe ist.

7. Dämmstruktur (10) nach Anspruch 1 und 4, **dadurch gekennzeichnet, dass** das erste Wärmeisolationsmittel (5, 5`) eine Teflonscheibe ist.

8. Dämmstruktur (10) nach Anspruch 1 und 4, **dadurch gekennzeichnet, dass** das erste Wärmeisolationsmittel (5, 5`) eine Scheibe aus glasfaserverstärktem Verbundwerkstoff ist.

9. Dämmstruktur (10) nach Anspruch 1 oder 3, **dadurch gekennzeichnet, dass** das innere Blech (1) zwischen einem lösbaren Befestigungsmittel (14) und einer an dem Ende (3a) befestigten Stütze (13) gehalten wird.

10. Dämmstruktur (10) nach einem der Ansprüche 1 bis 9, **dadurch gekennzeichnet, dass** die Stütze (13) ein Blech oder eine Scheibe ist.

11. Dämmstruktur (10) nach den Ansprüchen 9 und 10, **dadurch gekennzeichnet, dass** die Stütze (13) an dem Ende (3a) durch Schweißen (15) oder eine Mutter (14`) befestigt ist.

12. Dämmstruktur (10) nach den Ansprüchen 9 und 11, **dadurch gekennzeichnet, dass** das innere Blech (1) an der Stütze (13) durch eine lösbare Befestigung (14) und/oder eine Scheibe (19) befestigt ist.

13. Dämmstruktur (10) nach einem der vorhergehenden Ansprüche, **dadurch gekennzeichnet, dass** die lösbaren Befestigungsmittel (6, 6`) Bolzen oder Muttern sind.

14. Dämmstruktur (10) nach einem der vorhergehenden Ansprüche, **dadurch gekennzeichnet, dass** auf der Innenfläche (2a) des äußeren Blechs (2) mehrere Stützelemente (4) aufgereiht und befestigt sind.

## Claims

1. Thermo-acoustic insulation structure (10) for the exhaust of a rotary machine, **characterized in that** it comprises at least one internal sheet (1) in contact with the exhaust gases and at least one external sheet (2), the sheets being mutually parallel, and between which sheets there is at least one layer of thermally insulating material (20), the said two sheets (1, 2) being joined together using at least one bar (3) and at least one support element (4) fixed to the external sheet (2), and **in that**, after the structure has been assembled, the internal sheet (1) is fixed to one end (3a) of the bar (3) while the other end (3b) is fixed to the support element (4) using at least one removable fixing means (6, 6') equipped with a first thermal insulation means (5, 5') so as to avoid contact between the said bar (3) and the support element (4) and the external sheet (2).

2. Insulation structure (10) according to Claim 1, **characterized in that** a second thermal insulation means (18) is placed between the end (3b) of the bar (3) and the internal surface (2a) of the external sheet (2).

3. Insulation structure (10) according to Claims 2, **characterized in that** the second thermal insulation means (18) is an insulating material of the ceramic, mineral or rock wool fibre type.

4. Insulation structure (10) according to Claim 1 or 3, **characterized in that** each first insulation means (5, 5') is positioned between each removable fixing means (6, 6') and the hole (17) in the support element (4).

5. Insulation structure (10) according to Claim 1 and 4, **characterized in that** at least one of the first insulation means (5, 5') is a flanged washer.

6. Insulation structure (10) according to Claim 1 and 4, **characterized in that** the first thermal insulation means (5, 5') is a ceramic washer.

7. Insulation structure (10) according to Claim 1 and 4, **characterized in that** the first thermal insulation means (5, 5') is a Teflon washer.

8. Insulation structure (10) according to Claim 1 and 4, **characterized in that** the first thermal insulation means (5, 5') is a glass fibre reinforced composite washer.

9. Insulation structure (10) according to Claim 1 or 3, **characterized in that** the internal sheet (1) is held between a removable fixing means (14) and a support (13) fixed to the end (3a).

10. Insulation structure (10) according to any one of Claims 1 to 9, **characterized in that** the support (13) is a sheet or a washer.

11. Insulation structure (10) according to Claims 9 and 10, **characterized in that** the support (13) is fixed to the end (3a) by welding (15) or with a nut (14').

12. Insulation structure (10) according to Claims 9 and 11, **characterized in that** the internal sheet (1) is fixed to the support (13) by a removable fixing (14) and/or a washer (19).

13. Insulation structure (10) according to any one of the preceding claims, **characterized in that** the removable fixing means (6, 6') are bolts or nuts.

14. Insulation structure (10) according to any one of the preceding claims, **characterized in that** several support elements (4) are arrayed and fixed on the internal surface (2a) of the external sheet (2).
